# EUROPEAN PATENT APPLICATION

(11) **EP 1 983 768 A1**
(43) Date of publication of application: **22.10.2008**
(21) Application number: 06832681.8
(22) Date of filing: 15.11.2006
(51) Int. Cl.: H04Q 7/22, H04Q 7/38

(54) **MOBILE COMMUNICATION TERMINAL AND CELL TRANSFER CONTROL METHOD**

(30) Priority: 23.01.2006 JP 2006014152
(71) Applicant: NTT DoCoMo, Inc., Chiyoda-ku Tokyo 100-6150 (JP)
(72) Inventor: SOKEI, Yoshimi, Chiyoda-ku, Tokyo 1006150 (JP); IDA, Takehiro, Chiyoda-ku, Tokyo 1006150 (JP); SAKURAMOTO, Hideyuki, Chiyoda-ku, Tokyo 1006150 (JP); TSURUTA, Kenji, Chiyoda-ku, Tokyo 1006150 (JP)
(74) Representative: Rupp, Christian
(86) International application number: PCT/JP2006/322756
(87) International publication number: WO 2007/083435

(57) **Abstract**

An object of the present invention is to prevent a failure in incoming from occurring even though the situation allows the incoming to a mobile communication terminal, and thereby to improve a connection rate in incoming.

A mobile communication terminal 10 is provided with a mobile communication function unit 13 for receiving an incoming signal from a base station; a determination unit 15 for, based on broadcast information received from a base station, determining whether a cell reselection with a cell of the base station being a cell reselection target is one across location registration areas; and a control unit 16 for performing such a control as to forbid the cell reselection, if it is determined that the cell reselection is one across location registration areas, after the incoming signal is received.

## Description

### Technical Field

The present invention relates to a mobile communication terminal and a cell reselection control method in the mobile communication terminal.

### Background Art

When incoming to a mobile communication terminal is performed in a mobile communication network, the following processing is carried out. First, the mobile communication network (actually, a base station) sends an incoming signal (PAGING) to the mobile communication terminal as an incoming object. The mobile communication terminal receives the incoming signal and sends a radio connection request (RRC CONNECTION REQUEST) to the base station in accordance with the incoming signal. Thereafter, the mobile communication terminal, receiving a response to the request, sends a connection completion notification (RRC CONNECTION SETUP COMPLETE) to the base station. A radio connection is established through such processing, thereby implementing incoming (e.g., cf. Patent Document 1 below).
Patent Document 1: Japanese Patent Application Laid-open No. 11-69458

### Disclosure of the Invention

### Problem to be Solved by the Invention

Incidentally, the radio connection request in reply to the aforementioned incoming signal is transmitted to only the base station or any other base station in the same location registration area as that where the base station having sent the incoming signal is located. Therefore, if the mobile communication terminal, after receiving the incoming signal, registers its location in another location registration area different from that upon reception of the incoming signal, the mobile communication terminal will be unable to send the radio connection request in reply to the incoming signal to any base station. In this case, even though the situation allows the incoming, no radio connection will be established with the incoming signal and thus a call loss can result, with failure in incoming.

The present invention has been accomplished in order to solve the above-described problem and an object of the invention is to provide a mobile communication terminal and a cell reselection control method capable of preventing the failure in incoming from occurring even though the situation allows the incoming to the mobile communication terminal, and thereby improving a connection rate in incoming.

### Means for Solving the Problem

In order to achieve the above object, a mobile communication terminal according to the present invention comprises: incoming signal receiving means for receiving an incoming signal from a base station; determining means for receiving broadcast information from a base station and for, based on the broadcast information received, determining whether a cell reselection with a cell of the base station being a cell reselection target is one across location registration areas; and control means for performing such a control as to forbid the cell reselection, if the determining means determines that the cell reselection is one across location registration areas, after the incoming signal receiving means receives the incoming signal.

In the mobile communication terminal according to the present invention, when it is determined after reception of an incoming signal that a cell reselection is one across location registration areas, the cell reselection is forbidden; therefore, the cell reselection across location registration areas is not carried out. For this reason, when a base station sends the incoming signal to the mobile communication terminal, the mobile communication terminal is able to certainly send a radio connection request to the base station or any other base station in the same location registration area as that where the base station having sent the incoming signal is located, thereby implementing incoming. Therefore, the mobile communication terminal according to the present invention is able to prevent a failure in incoming from occurring even though the situation allows the incoming to the mobile communication terminal, and thereby to improve a connection rate in incoming.

Incidentally, the present invention can also be described as the invention of the cell reselection control method in the mobile communication terminal as described below, as well as can be described as the invention of the mobile communication terminal above. This is different only in category but is substantially the same invention, with the same action and effect.

Namely, a cell reselection control method according to the present invention is a cell reselection control method in a mobile communication terminal, comprising: an incoming signal reception step of receiving an incoming signal from a base station; a determination step of receiving broadcast information from a base station and, based on the broadcast information received, determining whether a cell reselection with a cell of the base station being a cell reselection target is one across location registration areas; and a control step of performing such a control as to forbid the cell reselection, if it is determined in the determination step that the cell reselection is one across location registration areas, after the incoming signal is received in the incoming signal reception step.

### Effect of the Invention

According to the present invention, the cell reselection across location registration areas is forbidden after reception of the incoming signal, and thus such cell reselection is not carried out. For this reason, when a base station sends the incoming signal to the mobile communication terminal, the mobile communication terminal is able to certainly send the radio connection request to the base station or any other base station in the same location registration area as that where the base station having sent the incoming signal is located, thereby implementing incoming. Therefore, the present invention succeeded in preventing the failure in incoming from occurring even though the situation allows the incoming to the mobile communication terminal, and thereby improving the connection rate in incoming.

### Brief Description of the Drawings

Fig. 1 is a drawing showing a configuration of a mobile communication terminal in an embodiment of the present invention.
Fig. 2 is a drawing showing an outline of functionality of a mobile communication terminal.
Fig. 3 is a sequence diagram showing a processing procedure (cell reselection control method) executed in a mobile communication terminal in an embodiment of the present invention.

### Description of Reference Symbols

10 mobile communication terminal; 11 sending/receiving unit; 12 cell phone function unit; 13 mobile communication function unit; 14 memory unit; 15 determination unit; 16 control unit; 20 base station; 21 cell.

### Best Mode for Carrying out the Invention

The preferred embodiments of the mobile communication terminal and cell reselection control method according to the present invention will be described below in detail with reference to the drawings. In the description of the drawings the same elements will be denoted by the same reference symbols, without redundant description.

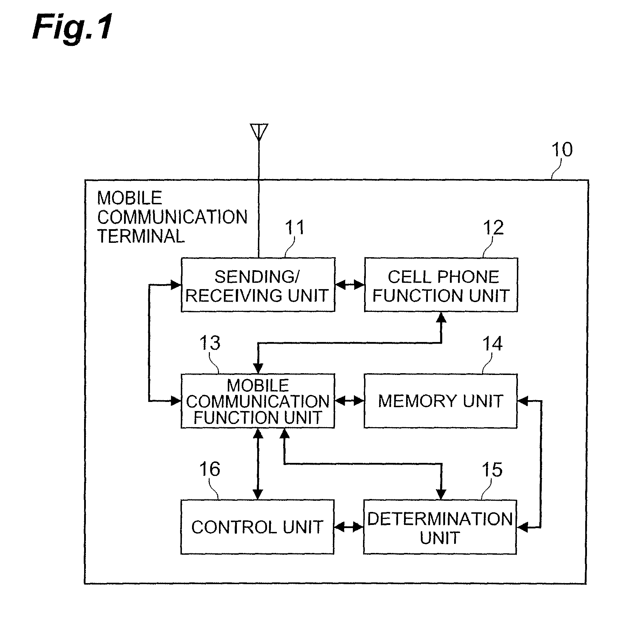

Fig. 1 shows a configuration of a mobile communication terminal 10 according to the present embodiment. In the present embodiment, the mobile communication terminal 10 is a cell phone capable of performing mobile communication. The mobile communication terminal 10, specifically, is composed of such hardware as a CPU (Central Processing Unit), a memory, and a mobile communication module such as an antenna, and these operate to exercise each of functions of the mobile communication terminal 10 described below. As shown in Fig. 1, the mobile communication terminal 10 has a sending/receiving unit 11, a cell phone function unit 12, a mobile communication function unit 13, a memory unit 14, a determination unit 15, and a control unit 16.

The sending/receiving unit 11 is connected to the antenna and is a means for sending and receiving radio waves for mobile communication. The sending/receiving unit 11 also performs such an operation as conversion between communication data and a radio wave.

The cell phone function unit 12 is connected to the sending/receiving unit 11 and is a means bearing the function of a cell phone. For example, the cell phone function unit 12 is connected to such hardware as a microphone and a speaker and functions to convert a user's input voice into communication data and send it to the sending/receiving unit 11, and to receive communication data from the sending/receiving unit 11, convert it into a voice, and output it.

The mobile communication function unit 13 is connected to the sending/receiving unit 11, the cell phone function unit 12, and the memory unit 14 and is a means for executing the mobile communication function of the mobile communication terminal 10. In the mobile communication terminal 10 the mobile communication function controlled by the mobile communication function unit 13 involves incoming processing and cell reselection. Besides them, the mobile communication function unit 13 also carries out a location registration process and others. The aforementioned incoming processing includes incoming call processing in telephony.

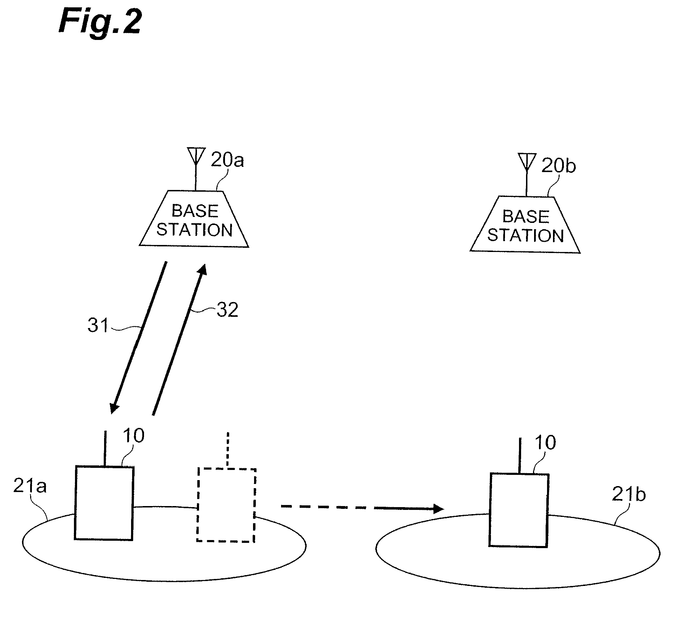

The incoming processing is a process carried out for establishing communication between two terminals when another terminal originates a call to the mobile communication terminal 10. The incoming processing is executed as follows. As shown in Fig. 2, first, a base station 20 (a generic name of base stations 20a, 20b) forming a mobile communication network sends an incoming signal (PAGING) 31 to the mobile communication terminal 10 as an incoming object. Here the base station 20 as a sender of the incoming signal 31 is one 20 in a location registration area where the mobile communication terminal 10 registers its location at the time of incoming. In the mobile communication terminal 10 the mobile communication function unit 13 receives the incoming signal 31 through the sending/receiving unit 11. Then the mobile communication function unit 13 sends a radio connection request (RRC CONNECTION REQUEST) 32 through the sending/receiving unit 11 to the base station 20. This radio connection request 32 is a request for establishing a radio connection for incoming.

When a radio connection from the mobile communication terminal 10 is available, the base station 20, receiving the radio connection request 32, sends a response (RRC CONNECTION SETUP) (not shown) according to the radio connection request 32. In the mobile communication terminal 10 the mobile communication function unit 13 receives the response through the sending/receiving unit 11 and sends a connection completion notification (RRC CONNECTION SETUP COMPLETE) (not shown) in reply to the response to the base station 20, followed by establishment of a radio connection and incoming. Namely, the mobile communication function unit 13 is an incoming signal receiving means for receiving the incoming signal 31 from the base station 20. When the mobile communication function unit 13 receives the incoming signal 31, it notifies the control unit 16 of the reception.

The base station 20 as a receiver of the radio connection request from the mobile communication terminal 10 has to be one 20 belonging to the same location registration area as that where the base station 20 having sent the incoming signal 31 to the mobile communication terminal 10 is located. The reason is that the radio connection request in reply to the incoming signal can be sent to only the base station 20 in the same location registration area as that where the base station 20 having sent the incoming signal is located. It is usually the case that a plurality of base stations 20 exist in one location registration area.

The mobile communication function unit 13 can receive broadcast information sent from the base station 20, for location registration and others. The mobile communication function unit 13 can determine to which location registration area the base station 20 (and a cell 21 of the base station 20) belongs, by referring to information to identify the location registration area, which is contained in the broadcast information. Namely, the mobile communication function unit 13 constitutes a determining means for receiving the broadcast information from the base station 20 and for, based on the broadcast information received, determining whether a cell reselection with the cell 21 of the base station 20 being a cell reselection target is one across location registration areas. The aforementioned information to identify the location registration area is, for example, information consisting of a character string to identify the location registration area. The mobile communication function unit 13 sends to the determination unit 15, the information to identify the location registration area to which the base station 20 belongs, which is contained in the broadcast information. In addition, the mobile communication function unit 13 stores the information to identify the location registration area where the mobile communication terminal 10 is located, in the memory unit 14.

The cell reselection is a changeover of the base station 20 as a communication partner of the mobile communication terminal 10. The mobile communication function unit 13 determines whether the cell reselection is to be carried out, based on the intensity (reception level) of a radio wave of the broadcast information from the base station 20, received by the mobile communication terminal 10. This determination is made using a cell reselection determination threshold stored in the memory unit 14. For example, in a case where the intensity of the radio wave from the cell 21 (base station 20) as a reselected cell is higher than the intensity of the radio wave from the cell 21 (base station 20) as an original cell and is over the cell reselection determination threshold, it is determined that the cell reselection is to be carried out. As shown in Fig. 2, the cell reselection is carried out, for example, when the mobile communication terminal 10 (or a user carrying it) migrates from a cell 21 a of a base station 20a to a cell 21b of a base station 20b and when the intensity of the radio wave from the base station 20b becomes higher than that from the base station 20a.

The memory unit 14 is a storage means storing information necessary for the control by the mobile communication function unit 13. Specifically, the information stored is, for example, such information as the cell reselection determination threshold and the information to identify the location registration area where the mobile communication terminal 10 is located. These pieces of information are referred to by the mobile communication function unit 13 as occasion may demand.

The determination unit 15 is a determining means for determining whether a cell reselection with the cell 21 of the base station 20 associated with the broadcast information received by the mobile communication function unit 13, is one across location registration areas. Specifically, it compares the information to identify the location registration area to which the base station 20 associated with the broadcast information belongs, with the information to identify the location registration area where the mobile communication terminal is located, and if they do not agree, the determination unit 15 determines that the cell reselection is one across location registration areas. Here the information to identify the location registration area to which the location information associated with the broadcast information belongs is information notified of by the mobile communication function unit 13. The information to identify the location registration area where the mobile communication terminal is located is obtained by referring to the information stored in the memory unit 14. When the cell reselection with the cell 21 of the base station 20 in association with the broadcast information received by the mobile communication function unit 13 being a cell reselection target is determined to be one across location registration areas, the determination unit 15 notifies the control unit 16 of information of the determination.

The control unit 16 is a control means for, when the determination unit 15 determines that the aforementioned cell reselection is one across location registration areas, after reception of the incoming signal by the mobile communication function unit 13, performing such a control as to forbid the cell reselection. The mobile communication function unit 13 notifies the control unit 16 of the reception of the incoming signal by the mobile communication function unit 13. The control to forbid the cell reselection is specifically carried out, for example, by controlling the mobile communication function unit 13 not to carry out the determination on execution of the cell reselection.

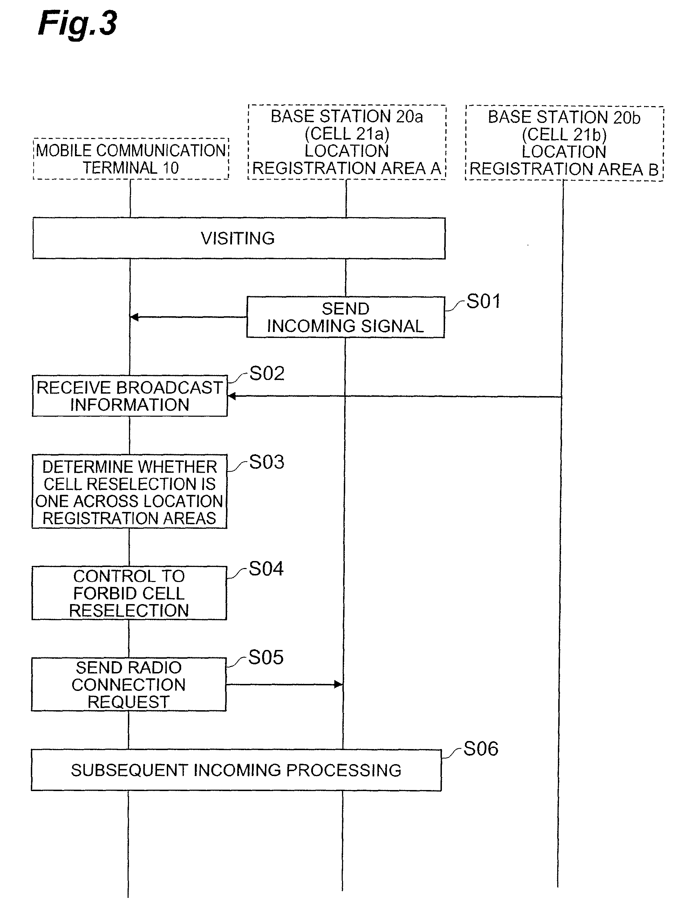

Subsequently, the processing (cell reselection control method) executed in the mobile communication terminal 10 of the present embodiment will be described using the sequence diagram of Fig. 3. This processing is carried out when incoming to the mobile communication terminal 10 is performed, for example, under such circumstances (1) that the mobile communication terminal 10 (or the user carrying it) is located in an area near a border of the cell 21 (a condition for occurrence of a cell reselection event) and (2) that the border is one across location registration areas. It is assumed in the description hereinafter that the mobile communication terminal 10 registers its location in "location registration area A" (or it is located in "location registration area A") and that the base station 20 as a communication partner thereof is the base station 20a belonging to "location registration area A." The mobile communication terminal 10 is assumed to be located at a border between the cell 21 a of the base station 20a and the cell 21b of the base station 20b. It is also assumed that the location registration area to which the base station 20b belongs is "location registration area B" different from "location registration area A" to which the base station 20a belongs.

First, another terminal originates a call to the mobile communication terminal 10 according to the present embodiment and the base station 20a sends the incoming signal to the mobile communication terminal 10 (S01, incoming signal reception step). In the mobile communication terminal 10 the mobile communication function unit 13 receives the incoming signal through the sending/receiving unit 11. The mobile communication function unit 13 notifies the control unit 16 of the reception.

Thereafter, the mobile communication function unit 13 receives the broadcast information from the base station 20b through the sending/receiving unit 11 (S02, determination step) and then the following processing is carried out in the mobile communication terminal 10. The reception of the broadcast information is not carried out at this timing only, but it is always carried out. However, reference to the broadcast information described below is carried out at this timing. First, based on the broadcast information, it is determined whether a cell reselection with the cell 21b of the base station 20b being a cell reselection target is one across location registration areas (S03, determination step). This determination is made as follows. The mobile communication function unit 13 retrieves the information to identify the location registration area to which the base station 20 having sent the broadcast information belongs, from the broadcast information, and notifies the determination unit 15 of the information. The determination unit 15 refers to the information, and the information to identify the location registration area where the mobile communication terminal 10 is located, which is stored in the memory unit 14, and determines whether the cell reselection with the cell 21b of the base station 20b being a cell reselection target is one across location registration areas. Specifically, as described above, it is determined that the cell reselection is one across location registration areas, unless the two pieces of information agree. In the present embodiment, since the cell reselection from the cell 21 a to the cell 21b is one to cause a difference of location registration area from the location registration area A to the location registration area B, the aforementioned cell reselection is determined to be one across location registration areas. The determination unit 15 notifies the control unit 16 of this determination result.

When the determination unit 15 determines that the cell reselection is one across location registration areas as described above, the control unit 16 then performs the control to forbid the cell reselection of the host terminal (S04, control step). Specifically, the cell reselection to the cell 21b is forbidden. This control forbids the mobile communication terminal 10 from performing the cell reselection to the cell 21b. The cell reselection to the cell 21b is not carried out even if the aforementioned broadcast information received is one having the intensity of the radio wave satisfying the condition for cell reselection.

Thereafter, in the mobile communication terminal 10 the mobile communication function unit 13 sends the radio connection request according to the received incoming signal through the sending/receiving unit 11 to the base station 20a (S05) and the subsequent incoming processing is carried out (S06). After completion of the incoming processing or at another appropriate timing, the control unit 16 cancels the control to forbid the cell reselection to the cell 21b.

If the cell reselection to the cell 21b were carried out without being forbidden, the location registration area to which the base station 20 as a communication partner belongs would be different from that before reception of the incoming signal. In this case, the mobile communication terminal 10 could not send the radio connection request in reply to the incoming signal to the base station 20. This would result in failure in radio connection in reply to the incoming signal and could cause a call loss, without implementation of incoming.

When the determination unit 15 determines that the cell reselection is not one across location registration areas (or when it determines that the cell reselection is one within the same location registration area), the control unit 16 does not perform the control to forbid the cell reselection. The reason is as follows. When the cell reselection is carried out within the same location registration area, the radio connection request in reply to the incoming signal can be transmitted to the base station 20 associated with the cell reselection target and the incoming processing is appropriately carried out. In this case, if the cell reselection were forbidden, the cell reselection would not be performed even though the situation allows better communication because of a stronger radio wave in the cell reselection target, and it could lower the connection rate in incoming.

In the present embodiment, as described above, when the base station 20a sends the incoming signal to the mobile communication terminal 10, the mobile communication terminal 10 is able to certainly send the radio connection request to the base station 20 in the same location registration area as that where the base station 20a having sent the incoming signal is located, thereby implementing incoming. Therefore, the present embodiment is able to prevent the failure in incoming from occurring even though the situation allows the incoming to the mobile communication terminal 10, and thereby to improve the connection rate in incoming.

The present embodiment is the example where the mobile communication terminal 10 is a cell phone, but the mobile communication terminal may be any other terminal capable of performing mobile communication, e.g., a PC (Personal Computer) or a PDA (Personal Digital Assistance) with the mobile communication function.

In the present embodiment, after reception of the broadcast information, it is determined whether the cell reselection is one across location registration areas, irrespective of whether the intensity of the radio wave associated with the broadcast information satisfies the condition for cell reselection. Instead thereof, it is also possible, for example, to adopt the following configuration: after reception of the broadcast information, it is determined whether the intensity of the radio wave associated with the broadcast information satisfies the condition for cell reselection and only if the condition for cell reselection is satisfied, it is determined whether the cell reselection is one across location registration areas and the control to forbid the cell reselection is carried out based thereon.

## Claims

1. A mobile communication terminal comprising:
incoming signal receiving means for receiving an incoming signal from a base station;
determining means for receiving broadcast information from a base station and for, based on the broadcast information received, determining whether a cell reselection with a cell of the base station being a cell reselection target is one across location registration areas; and
control means for performing such a control as to forbid the cell reselection, if the determining means determines that the cell reselection is one across location registration areas, after the incoming signal receiving means receives the incoming signal.

2. A cell reselection control method in a mobile communication terminal, comprising:
an incoming signal reception step of receiving an incoming signal from a base station;
a determination step of receiving broadcast information from a base station and, based on the broadcast information received, determining whether a cell reselection with a cell of the base station being a cell reselection target is one across location registration areas; and
a control step of performing such a control as to forbid the cell reselection, if it is determined in the determination step that the cell reselection is one across location registration areas, after the incoming signal is received in the incoming signal reception step.
